(19) Europäisches Patentamt
European Patent Office
Office européen des brevets

(11) **EP 2 979 506 B1**

(12) **EUROPEAN PATENT SPECIFICATION**

(45) Date of publication and mention
of the grant of the patent:
**28.06.2017 Bulletin 2017/26**

(51) Int Cl.:
***H04W 8/00*** *(2009.01)*       *H04W 48/08* *(2009.01)*
***H04W 72/04*** *(2009.01)*

(21) Application number: **13711723.0**

(22) Date of filing: **26.03.2013**

(86) International application number:
**PCT/EP2013/056452**

(87) International publication number:
**WO 2014/154256 (02.10.2014 Gazette 2014/40)**

(54) **NODE DISCOVERY ACCORDING TO ALLOCATED DISCOVERY PATTERNS**

KNOTENAUFFINDUNG GEMÄSS ZUGEWIESENER AUFFINDUNGSMUSTER

DÉCOUVERTE DE NOEUDS EN FONCTION DES MOTIFS DE DÉCOUVERTE ATTRIBUÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**03.02.2016 Bulletin 2016/05**

(73) Proprietor: **Nokia Solutions and Networks Oy
02610 Espoo (FI)**

(72) Inventors:
• **TIIROLA, Esa, Tapani
FI-90450 Kempele (FI)**
• **PAJUKOSKI, Kari, Pekka
FI-90240 Oulu (FI)**

(74) Representative: **Nokia Corporation
Intellectual Property Department
Karakaari 7
02610 Espoo (FI)**

(56) References cited:
**EP-A1- 1 903 705**      **WO-A1-2011/121374**
**US-A1- 2013 051 277**

## Description

One feature of some radio communication systems is that each node broadcasts signals by which neighbouring nodes can discover information about their respective radio link with that node.

The patent publication WO 2011/121374 A1 discloses a method for device discovery through beaconing, comprising identifying at least one beacon opportunity at a wireless network device, selecting a beacon channel from a beacon slot that is a flexibly allocated frequency resource, and transmitting at least one beacon signal in the selected beacon channel multiplexed in a beacon frame during the identified beacon opportunity. The challenge of providing an efficient technique for transmitting and/or detecting discovery signals thus exists.

There is hereby provided a method, comprising: controlling a radio transmitter or radio transceiver of a first node to transmit discovery signals at time periods defined by a first discovery pattern allocated to said first node from a set of discovery patterns each defining a respective combination of transmission time periods from a set of time periods; and controlling the radio transmitter or radio transceiver to use for said discovery signals one or more radio resources allocated to the transmission time periods of said first discovery pattern from radio resources shared by the set of discovery patterns, wherein any radio resource allocated to any transmission time period of any one of the discovery patterns is distinguished from any radio resource allocated to any other of the discovery patterns for the same transmission time period.

According to one embodiment, the method further comprises controlling said radio transmitter or radio transceiver to make transmissions according to a frame structure in which a radio frame is divided into sub-frames; and said set of time periods are spread across a plurality of said sub-frames.

According to one embodiment, each discovery pattern of the set of discovery patterns comprises the same number of transmission time periods, and the same number of detect time periods for the detection of discovery signals transmitted by other nodes according to other discovery patterns from said set of discovery patterns.

According to one embodiment, the number of transmission time periods for each discovery pattern is the same as the number of detect time periods for each discovery pattern.

According to one embodiment, the set of radio resources shared by the set of discovery patterns comprises a set of frequency resources for frequency division multiplexing of discovery signals or a set of spreading codes for code division multiplexing of discovery signals or a set of time resources for time division multiplexing of discovery signals.

According to one embodiment, the method further comprises controlling a radio receiver or radio transceiver of the first node to receive from a controlling node an indicator of which one of said set of discovery patterns is assigned to the first node, and information about how radio resources for discovery signals are shared between the set of discovery patterns.

There is also hereby provided a method, comprising: receiving from a radio receiver or radio transceiver of a first node information about signals detected in time periods assigned to transmissions of discovery signals by other nodes; and allocating said detected signals to respective ones of a set of discovery patterns according to information about how a set of radio resources is mapped to said set of discovery patterns, wherein each discovery pattern defines a respective combination of transmission time periods from a set of time periods, and wherein any radio resource allocated to any transmission time period of any one of the discovery patterns is distinguished from any radio resource allocated to any other of the set of discovery patterns for the same transmission time period.

There is also hereby provided a method, comprising: controlling a radio transceiver or radio transmitter to transmit to a node information about a discovery pattern assigned to said node out of a set of discovery patterns; and controlling said radio transceiver or radio transmitter to transmit to said node information about how a set of radio resources is mapped to said set of discovery patterns; wherein each discovery pattern defines a respective combination of transmission time periods from a set of time periods, and wherein any radio resource allocated to any transmission time period of any one of the discovery patterns is distinguished from any radio resource allocated to any other of the set of discovery patterns for the same transmission time period.

There is also hereby provided an apparatus comprising: a processor and memory including computer program code, wherein the memory and computer program code are configured to, with the processor, cause the apparatus to: control a radio transmitter or radio transceiver of a first node to transmit discovery signals at time periods defined by a first discovery pattern allocated to said first node from a set of discovery patterns each defining a respective combination of transmission time periods from a set of time periods; and control the radio transmitter or radio transceiver to use for said discovery signals one or more radio resources allocated to the transmission time periods of said first discovery pattern from radio resources shared by the set of discovery patterns, wherein any radio resource allocated to any transmission time period of any one of the discovery patterns is distinguished from any radio resource allocated to any other of the discovery patterns for the same transmission time period.

According to one embodiment of the apparatus, the memory and computer program code are further configured to, with the processor, cause the apparatus to control said radio transmitter or radio transceiver to make transmissions according to a frame structure in which a radio frame is divided into sub-frames; and wherein said set of time periods are spread across a plurality of said sub-frames.

According to one embodiment of the apparatus, each discovery pattern of the set of discovery patterns comprises the same number of transmission time periods, and the same number of detect time periods for the detection of discovery signals transmitted by other nodes according to other discovery patterns from said set of discovery patterns.

According to one embodiment of the apparatus, the number of transmission time periods for each discovery pattern is the same as the number of detect time periods for each discovery pattern.

According to one embodiment of the apparatus, the set of radio resources shared by the set of discovery patterns comprises a set of frequency resources for frequency division multiplexing of discovery signals or a set of spreading codes for code division multiplexing of discovery signals or a set of time resources for time division multiplexing of discovery signals.

According to one embodiment of the apparatus, the memory and computer program code are further configured to, with the processor, cause the apparatus to control a radio receiver or radio transceiver of the first node to receive from a controlling node an indicator of which one of said set of discovery patterns is assigned to the first node, and information about how radio resources for discovery signals are shared between the set of discovery patterns.

There is also hereby provided an apparatus comprising: a processor and memory including computer program code, wherein the memory and computer program code are configured to, with the processor, cause the apparatus to: receive from a radio receiver or radio transceiver of a first node information about signals detected in time periods assigned to transmissions of discovery signals by other nodes; and allocate said detected signals to respective ones of a set of discovery patterns according to information about how a set of radio resources is mapped to said set of discovery patterns, wherein each discovery pattern defines a respective combination of transmission time periods from a set of time periods, and wherein any radio resource allocated to any transmission time period of any one of the discovery patterns is distinguished from any radio resource allocated to any other of the set of discovery patterns for the same transmission time period.

Some embodiments of the present invention are described in detail hereunder, by way of example only, with reference to the accompanying drawings, in which:

Figure 1 illustrates an example of a collection of neighbouring nodes for which embodiments of the present invention can be implemented;
Figure 2a illustrates an example of apparatus for use at a user equipment (UE) in Figure 1;
Figure 2b illustrates an example of apparatus for use at a relay node (RN) in Figure 1;
Figure 3 illustrates an example of apparatus for use at an access point in Figure 1;
Figure 4 illustrates an example of a radio frame structure for which embodiments of the present invention can be implemented;
Figure 5 illustrate an example of a collection of unique combinations of detect and transmit periods.
Figures 6a and 6b illustrate one example of sharing radio resources between the transmit periods in Figure 5;
Figures 7a and 7b illustrate another example of sharing radio resources between the transmit periods in Figure 5; and
Figure 8 illustrates an example of the operations at a node in accordance with an embodiment of the present invention.

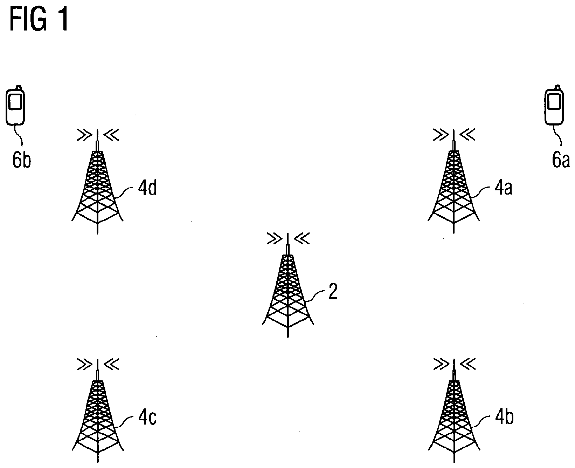

Figure 1 illustrates an example of a collection of nodes in which an embodiment of the present invention can be implemented. The collection of nodes includes an access point AP 2, relay nodes 4 under the control of access point 2, and user equipment devices UE 6. For simplicity, only 2 UEs are shown in Figure 1, but a large number of UEs would typically be within the control area of an AP at any one time.

The access point may for example be a base station (e.g. eNodeB of a Evolved UTRAN) of a radio access network, typically comprising thousands of such base stations each operating one or more cells. The coverage area of each cell depends on the transmission power and the directionality of the antenna by which the cell is operated. Alternatively, the access point may be a combination of network entities such as a remote radio head and server or host. The relay nodes 4 mainly facilitate connections between the UEs 6 and the AP 2, but can also facilitate connections between UEs 6 other than via the AP 2. Connections between two UEs 2 via a relay node 4 are also operated under the control of the access point 2.

The AP 2, RNs 4 and UEs 6 each regularly broadcast signals from which can be obtained information about the radio links between each pair of nodes. The RNs 4 and UEs 6 report measurements of these signals to the controlling AP 2.

It should be noted that the example given above of connections between two UEs via a relay node is given merely for illustration purposes. The techniques described below are also of use for the transmission and reception of discovery signals by nodes engaged in direct device-to-device communication (between UEs other than via any other node such as an access point or relay node) and self backhauling (among RNs and/or APs).

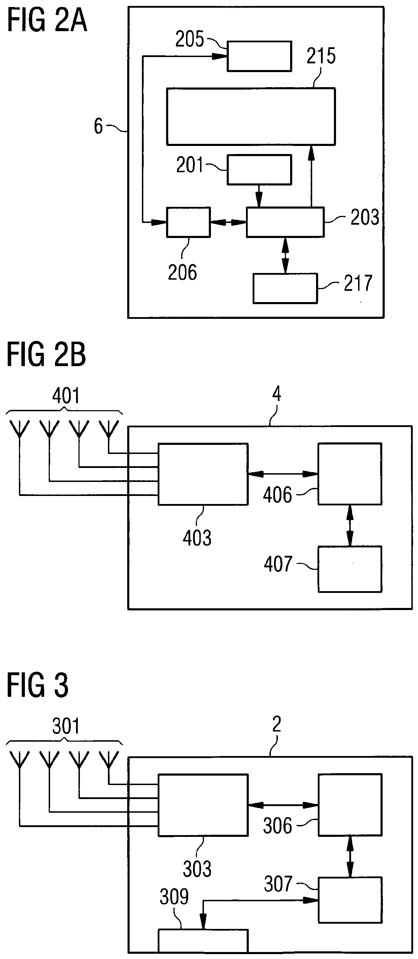

Figure 2a shows a schematic view of an example of user equipment or user device (UE) 6 that may be used for communicating with the RNs 4 or AP 2 of Figure 1 via a wireless interface. The UE 6 may be any device capable of at least sending or receiving radio signals to or from the AP 2 or RNs 4 of Figure 1.

UE 6 may, for example, be a device designed for tasks involving human interaction such as making and receiving phone calls between users, and streaming multimedia or providing other digital content to a user. Non-limiting examples include a smart phone, and a laptop computer/notebook computer/tablet computer/ e-reader device provided with a wireless interface facility.

The UE 6 may communicate via radio transceiver circuitry, unit or module 206 and associated antenna arrangement 205 comprising at least one antenna or antenna unit. The antenna arrangement 205 may be arranged internally or externally to the UE 2.

The UE 6 may be provided with at least one data processing entity 203 and at least one memory or data storage entity 217 for use in tasks it is designed to perform. The data processor 203 and memory 217 may be provided on an appropriate circuit board and/or in chipsets. The memory or data storage entity is typically internal but may also be external or a combination thereof, such as in the case when additional memory capacity is obtained from a service provider.

In the cases of devices designed for human interaction, the user may control the operation of the UE 6 by means of a suitable user interface such as key pad 201, voice commands, touch sensitive screen or pad, combinations thereof or the like. A display 215, a speaker and a microphone may also be provided. Furthermore, the UE 6 may comprise appropriate connectors (either wired or wireless) to other devices and/or for connecting external accessories, for example hands-free equipment, thereto.

Figure 2b shows an example of apparatus for use at the RNs of Figure 1. The apparatus comprises or is coupled to a radio frequency antenna array 401 (comprising at least one antenna or antenna unit) configured to receive and transmit radio frequency signals; radio transceiver circuitry, module or unit 403 configured to interface the radio frequency signals received and transmitted by the antenna 401 and the data processor 406. The data processor 406 is configured to process signals from the radio transceiver 403. It may also control the radio transceiver 403 to generate suitable RF signals to communicate information to another of the nodes (UE or AP) via the wireless communications link. The memory or data storage unit 407 is used for storing data, parameters and/or instructions for use by the data processor 406. The memory or data storage entity may be internal or external (locating in another network entity) or a combination thereof.

Figure 3 shows an example of apparatus for use at the AP 2 of Figure 1. The apparatus comprises or is coupled to a radio frequency antenna array 301 (comprising at least one antenna or antenna unit) configured to receive and transmit radio frequency signals; radio transceiver circuitry, module or unit 303 configured to interface the radio frequency signals received and transmitted by the antenna 301 and the data processor 306. The apparatus usually comprises an interface 309 via which, for example, it can communicate with other network elements such as the core network (not shown). The data processor 306 is configured to process signals from the radio transceiver 303. It may also control the radio transceiver 303 to generate suitable RF signals to communicate information to another of the nodes (UE or RN) via the wireless communications link, and also to exchange information with other network nodes across a wired link via the interface 309. The memory or data storage unit 307 is used for storing data, parameters and/or instructions for use by the data processor 306. The memory or data storage entity may be internal or external (locating in another network entity) or a combination thereof.

The memories 217, 307, 407 may be implemented using an suitable data storage technology, such as, for example, semiconductor based memory devices, flash memory, magnetic memory devices and systems, optical memory devices and systems, fixed memory and removable memory. The processors 203, 306, 406 may, for example, include one or more of microprocessors, digital signal processors (DSPs) and processors based on a multi-core processor architecture.

References below to data processors 203, 306, 406 controlling the operation of the UE and NB refer to the data processors operating in accordance with program code stored at memories 217, 307, 407.

It would be appreciated that the apparatus shown in each of figures 2 and 3 described above may comprise further elements which are not directly involved with the embodiments of the invention described hereafter.

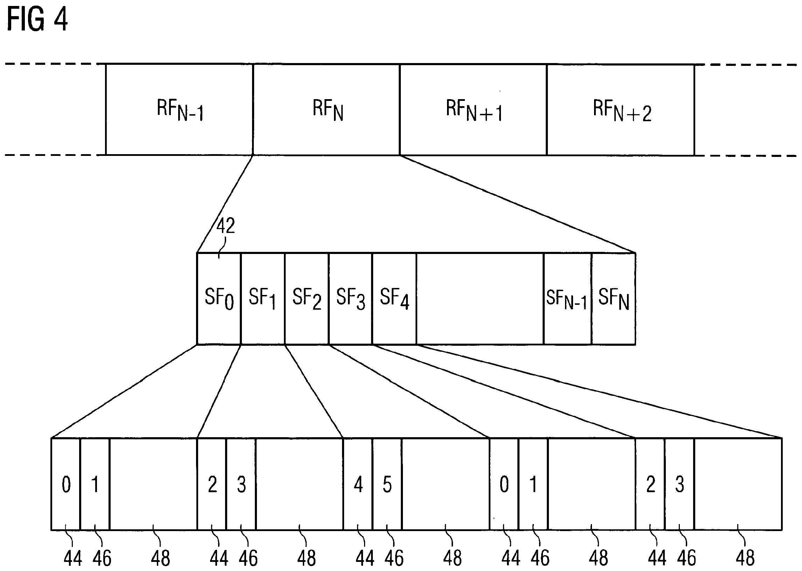

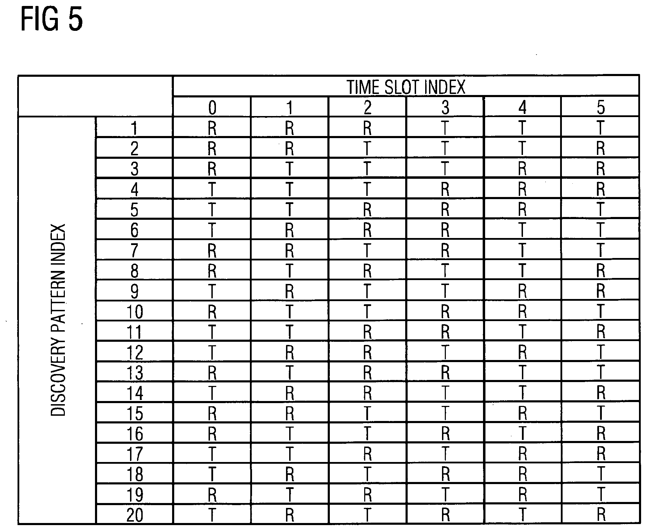

In one example, the data processors 203, 306, 406 at each node (AP 2, RN 4 or UE 6) control the transceivers 206, 303, 403 at each node to make transmissions according to a frame structure of the kind illustrated in Figure 4. The time domain is divided up into radio frames 40 of predetermined length, and each radio frame 40 is divided up into N sub-frames 42 of another predetermined length. A node (AP, RN or UE) can only be in either a transmitting mode or a detecting mode at any instant of time, and each sub-frame 42 is divided up into time slots, comprising at least two slots 44, 46 for detecting or transmitting control information including discovery signals; and at least one slot 48 for receiving or transmitting data. Guard periods (not shown) are provided between the time slots 44, 46 and 48 with the aim of ensuring slot alignment between nodes regardless of how each node uses each time slot (i.e. for transmission phase or reception phase according to its respective discovery pattern etc.). In the example shown in Figure 4, two time slots 44, 46 for detecting or transmitting discovery signals are provided at the beginning of each sub-frame. The sub-frames are collected into groups of n consecutive sub-frames (n being an integer value), and each node within a group of nodes uses the total of 2n slots within each group of n sub-frames for detecting and transmitting discovery signals according to a respective discovery pattern from a set of discovery patterns. These 2n slots are hereafter referred to as discovery slots. The number of discovery slots used for transmitting discovery signals is the same for each discovery pattern of the set of discovery patterns, and the number of discovery slots used for detecting discovery signals is the same for each discovery pattern of the set of discovery patterns. Furthermore, each discovery pattern of the set of discovery patterns has an equal number of transmission and detection slots. This arrangement ensures bi-directional discovery between any pair of nodes operating according to a respective discovery pattern of the set of discovery patterns of length 2n. In more detail: for each possible pair of discovery patterns within the same set of discovery patterns, there is at least one time slot which is a transmitting slot for a first one of the pair of discovery patterns and a detecting slot for the second of the pair of discovery patterns, and at least one time slot which is a transmitting slot for the second of the pair of discovery patterns and is a transmitting slot for the first pair of discovery patterns. In other words, each node operating according to a respective discovery pattern has at least one opportunity to detect discovery signals broadcast by each and every other node operating according to a respective different one of the set of discovery patterns. In the example shown in Figure 5, the sub-frames are collected into groups of sub-frames (i.e. 3 sub-frames, and the number of transmission portions is the same (i.e. 3) within each discovery pattern of the set of discovery patterns to be used. The 6 discovery slots in each group of 3 sub-frames are divided equally between transmitting and detecting slots. The 20 unique combinations (discovery patterns) are shown in Figure 5, and AP 2 and each node 4, 6 within the group of nodes controlled by AP 2 is assigned a respective one of these discovery patterns. In the Figure, the transmitting slots are indicated by T, and the detecting/receiving slots are indicated by R.

It is to be noted that with the discovery pattern design example described above, there are exactly 10 discovery patterns that involve transmissions within each discovery time slot, and no more than 10 different radio resources for discovery signals are sufficient to permit each discovery pattern to use a different radio resource within the same discovery time slot. The number of radio resources needed to transmit discovery signals for all of the set of discovery patterns is less than the number of discovery patterns in the set.

More generally, for any collection of N discovery time slots of which k slots are for transmitting discovery signals and (N-k) slots are for detecting discovery signals, the number of radio resources that is sufficient to permit each discovery pattern involving a transmission within a discovery slot to use a different radio resource is expressed by the following formula:

$$(N!k)/(k!(N-k)!N)$$

If the number of nodes controlled by AP 2 is less than the total number of possible discovery patterns (e.g. if the number of nodes is less than 18 in the example of N = 6 and k = 3), the number of radio resources that is sufficient to permit each transmitting node to use a different radio resource within the same discovery time slot can be even less than the number expressed by the above formula.

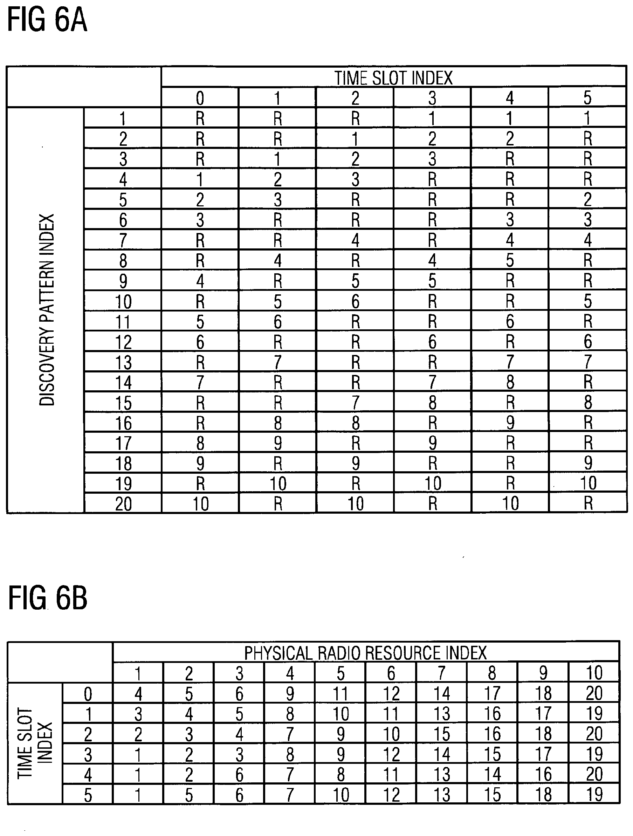

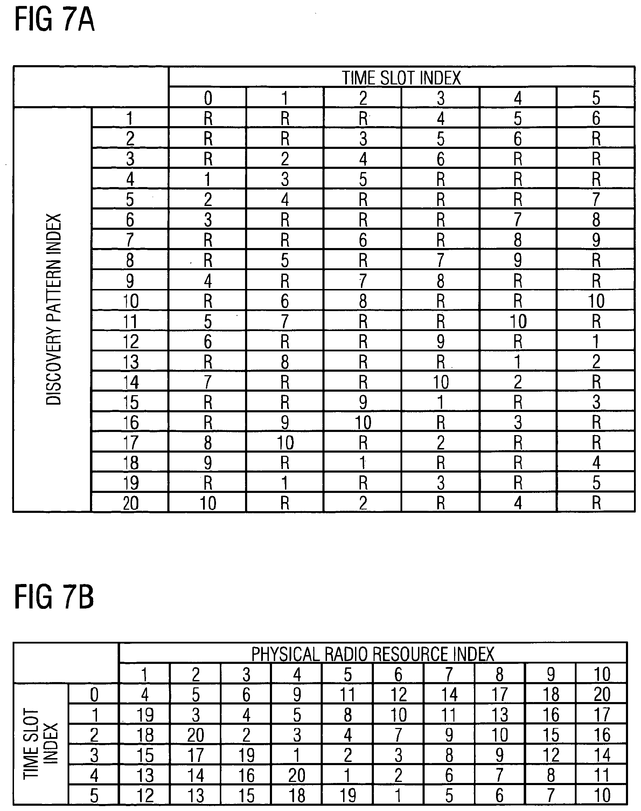

Two different examples of how the radio resources can be shared between the 20 discovery patterns (unique combinations of transmitting and detecting discovery slots) are illustrated in Figures 6 and 7. Figures 6a and 7a identify the radio resource used for each combination of time slot and discovery pattern; and Figures 6b and 7b identify the discovery pattern for each combination of radio resource and time slot.

The way in which the discovery signal resources are shared out between the discovery patterns, i.e. the way in which the discovery signal resources are mapped to the discovery patterns, can be communicated to each of the group of nodes, so that a node can (a) determine the discovery signal resources to be used by that node from the respective discovery pattern assigned to that node, and/or (b) assign measurements of detected discovery signals to respective ones of the other discovery patterns, and possibly also report those measurements to the controlling node AP. For example, in the example illustrated in Figure 6, a node to which discovery pattern #4 has been assigned would transmit discovery signals in each of time slots #0, #1 and #2 using discovery signal resources #1, #2 and #3, respectively; and any node detecting any one or more of discovery signal resource #7 in time slot #0, discovery signal resource #7 in time slot #3 and discovery signal resource #8 in time slot #4, would report measurements of those discovery signals as measurements of discovery signals for the node to which discovery pattern #14 has been assigned.

As mentioned above, a feature of the kind of collection of discovery patterns used in this embodiment is that each node has at least one opportunity within its discovery pattern spanning N time slots (e.g. N = 6 time slots) to detect discovery signals transmitted by each and every one of the other nodes operating according to a respective different one of the set of discovery patterns. This corresponds to a capability to perform bi-directional discovery. If a node has more than one opportunity in its discovery pattern to detect discovery signals from another node (e.g. the node to which discovery pattern #3 is assigned has two opportunities (in time slots #4 and #5) to detect discovery signals transmitted by the node to which discovery pattern #1 is assigned), the data processor 203, 406 at a detecting node can control the transceiver 206, 403 of the detecting node to transmit a report of an average of the two measurements to AP 2. The mapping relationship between the discovery patterns and the discovery signal resources can be stored in the memories 203, 307, 407 at each of the nodes in a tabulated form (as illustrated in Figures 6 and 7) or in some other form such as a mathematical equation expressing the relationship.

The mapping relationship can be highly ordered, such as is the case in the example of Figure 6, in which the order in which the physical resources are shared between the discovery patterns is the same for each time slot. Alternatively, the mapping relationship can be more randomised, such as in the case of the example illustrated in Figure 7. Randomisation can serve to better mitigate interference between discovery signals caused by deviations from the ideal of the orthogonality of each of the physical discovery resources with respect to each other. Furthermore, the mapping relationship can be redesigned to minimise variation in the number of measurement opportunities between each pair of discovery patterns in the same set of discovery patterns.

The operation of AP 2 may involve a processor 307 at AP 2 assigning a respective discovery pattern to itself and each other node (RN4 or UE 6) within its control, and controlling the transceiver 303 of AP 2 to transmit to each of those other nodes (RN 4 or UE 6) information about the respective discovery pattern assigned to that node, and also information about the way in which physical discovery signal resources are shared between the discovery patterns. This information can be transmitted as part of dedicated or broadcast signalling. For example, the signalling could be Radio Resource Control (RRC) signalling.

If the other nodes (RNs and UEs) are aware in advance of the use of this kind of discovery technique, then the data processor 306 at AP 2 may simply control the transceiver 303 to transmit to each of the other nodes (by dedicated signalling or broadcast signalling) information about the available discovery resources (i.e. time slots and radio resources for transmitting discovery signals in those time slots), and an index identifying the one discovery pattern assigned to the respective node.

If the whole set (e.g. 20 in the case of the above-described example of N=6, k=3) of discovery patterns in the group are not in use, the data processor 306 at AP 2 can also control the transceiver 303 to provide information about which discovery patterns are currently in use, whereby the data processors 203, 406 at the receiving nodes can control the transceivers 206, 403 at those nodes to restrict the number of physical discovery resources to be scanned in any detect time slot. For example, if the total number of nodes (including AP 2) involved in the discovery process happened to be fifteen, then the data processor 306 at AP 2 could decide based on rules stored in memory 307 to only use the discovery patterns #1 to #15 of Figure 5; and for the example of Figure 6, the number of resources needed to be scanned by each node in a detecting time slot would be only eight (resource #1 to resource #8).

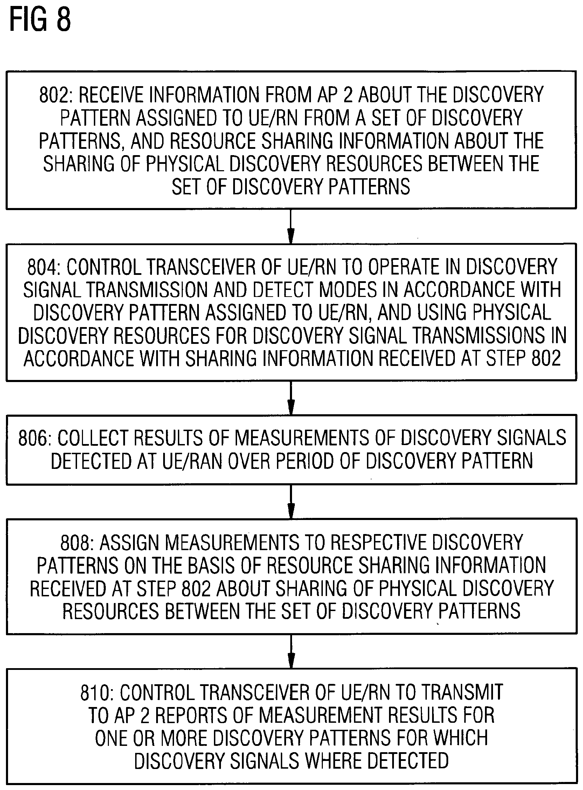

With reference to exemplifying Figure 8, the operation of the other nodes (RNs 4 and UEs 6) controlled by AP 2 involves the data processors 203, 406 at each of the other nodes controlling their respective transceivers 206, 403 to receive transmissions including the above-mentioned information about the respective discovery pattern assigned to the respective node and the information about how the physical discovery resources are shared between the discovery patterns (STEP 802), and the data processors 203, 406 at each of the other nodes control their respective transceivers 206, 403 to transmit and detect discovery signals according to the respective discovery pattern assigned to it (STEP 804). If the discovery pattern assigned to a node indicates that a discovery time slot is a transmitting time slot for that node, the data processor 203, 406 at that node controls its transceiver 206, 403 to transmit a discovery signal in that time slot using a physical discovery resource in accordance with the received information about the way in which discovery signal resources are shared between all the discovery patterns in the same set of discovery patterns. On the other hand, if the discovery pattern assigned to the node indicates that a discovery time slot is a detecting time slot for that node, the data processor 203, 406 for that node controls the transceiver 206, 403 to scan all the different physical discovery resources shared by the set of discovery patterns, and make measurements (e.g. one or more of path loss, power at which the signal is detected (Rx level), signal-to-noise ratio (SINR), etc..) of all the detected different discovery signals. It is noted that one or more of the discovery signals (i.e. the signals subject to the measurements described above) may be control signals having other control functions and/or data transmissions. One example is to utilize discovery resources allocated to the transmission of discovery signals for conveying resource allocation grants. In this scenario, the transmission from a node of signals that other nodes use to discover the node might not take place in every transmission time slot of the discovery pattern assigned to the node, but only when e.g. there is a need for the transmitting node to transmit control signals for other purposes. For the example of a first node using the discovery signal resources for communicating resource allocation grants, other nodes would only be able to make discovery measurements for that node when there is data to be transmitted to or from that first node. As well as measuring the resource grant signal for discovery purposes, a detecting node would perform a blind decoding-type of operation to determine whether the allocation resource grant relates to the transmission of data to or from that detecting node.

The data processor 203, 406 of the node controls its transceiver 206, 403 to repeat the above for the entire period (e.g. N=6 time slots) of the discovery pattern, and collects the measurement results (STEP 806). The data processor 203, 406 at the node assigns each measurement to a respective discovery pattern according to the information about the way in which discovery signal resources are shared between the discovery patterns in the same group (STEP 808), and controls its transceiver 206, 403 to make a transmission to AP2 including information about the respective measurement (or measurement averages) for each discovery pattern (STEP 810). Each node within the control of the AP 2 repeats this procedure for each repeating set of N (e.g. 6) time slots.

The physical discovery resources can, for example, be: different resource elements corresponding to different frequencies or sets of frequencies in the case of frequency divisional multiplexing of discovery signals in the same time slot; or different spreading codes in the case of code divisional multiplexing of discovery signals in the same time slot. There can be also time division multiplexing among plurality of discovery resources within one time slot (e.g. with the granularity of OFDM symbol), wherein two or more discovery patterns use e.g. the same frequency and/or spreading code in the same time slot but at different sub-slots (wherein sub-slots could, for example have the length of an OFDM symbol) within the same time slot. Furthermore, any combination of the above-mentioned or other multiplexing techniques can be applied.

The discovery signals can, for example, be one or more of common reference signals (CRS), sounding reference signals (SRS), demodulation reference signals (DMRS) and channel-state information reference signals (CSI-RS). Furthermore, it is possible to assign different channels, e.g. PDCCH/EPDCCH (physical data control channel / enhanced physical control channel) as discovery signals/resources.

The sharing of physical discovery resources between discovery patterns in the above-described technique is designed to minimise the number of discovery resources required for the discovery process.

The above-described technique is of use, for example, in obtaining measurements of discovery signals for the purpose of controlling connections between nodes other than via a controlling node (e.g. AP 2 in Figure 1), such as device-to-device (D2D) connections. This kind of connection is expected to be of increasing importance in Beyond 4G (B4G) radio systems. The B4G system is considered to be based on a similar kind of architecture as the LTE-Advanced.

The program code mentioned above may include software routines, applets and macros. Program code may, for example, be copied into the one or more memories 203, 307 from any apparatus-readable non-transitory data storage medium. Computer program codes may be coded by a programming language, which may be a high-level programming language, such as objective-C, C, C++, C#, Java, etc., or a low-level programming language, such as a machine language, or an assembler.

Alternatively, some of the above-described functions or other functions performed at the UE or NB may be implemented by application specific integrated circuits (ASICs).

The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

In addition to the modifications explicitly mentioned above, it will be evident to a person skilled in the art that various other modifications of the described embodiment may be made within the scope of the invention.

## Claims

1. A method, comprising: controlling a radio transmitter or radio transceiver of a first node to transmit discovery signals at time periods defined by a first discovery pattern allocated to said first node from a set of discovery patterns each defining a respective combination of transmission time periods from a set of time periods; and controlling the radio transmitter or radio transceiver to use for said discovery signals one or more radio resources allocated to the transmission time periods of said first discovery pattern from radio resources shared by the set of discovery patterns, wherein any radio resource allocated to any transmission time period of any one of the discovery patterns is distinguished from any radio resource allocated to any other of the discovery patterns for the same transmission time period.

2. A method according to claim 1, further comprising controlling said radio transmitter or radio transceiver to make transmissions according to a frame structure in which a radio frame is divided into sub-frames; and said set of time periods are spread across a plurality of said sub-frames.

3. A method according to any preceding claim, wherein each discovery pattern of the set of discovery patterns comprises the same number of transmission time periods, and the same number of detect time periods for the detection of discovery signals transmitted by other nodes according to other discovery patterns from said set of discovery patterns.

4. A method according to claim 3, wherein the number of transmission time periods for each discovery pattern is the same as the number of detect time periods for each discovery pattern.

5. A method according to any preceding claim, wherein the set of radio resources shared by the set of discovery patterns comprises a set of frequency resources for frequency division multiplexing of discovery signals or a set of spreading codes for code division multiplexing of discovery signals or a set of time resources for time division multiplexing of discovery signals.

6. A method according to any preceding claim, comprising controlling a radio receiver or radio transceiver of the first node to receive from a controlling node an indicator of which one of said set of discovery patterns is assigned to the first node, and information about how radio resources for discovery signals are shared between the set of discovery patterns.

7. A method, comprising: receiving from a radio receiver or radio transceiver of a first node information about signals detected in time periods assigned to transmissions of discovery signals by other nodes; and allocating said detected signals to respective ones of a set of discovery patterns according to information about how a set of radio resources is mapped to said set of discovery patterns, wherein each discovery pattern defines a respective combination of transmission time periods from a set of time periods, and wherein any radio resource allocated to any transmission time period of any one of the discovery patterns is distinguished from any radio resource allocated to any other of the set of discovery patterns for the same transmission time period.

8. A method, comprising: controlling a radio transceiver or radio transmitter to transmit to a node information about a discovery pattern assigned to said node out of a set of discovery patterns; and controlling said radio transceiver or radio transmitter to transmit to said node information about how a set of radio resources is mapped to said set of discovery patterns; wherein each discovery pattern defines a respective combination of transmission time periods from a set of time periods, and wherein any radio resource allocated to any transmission time period of any one of the discovery patterns is distinguished from any radio resource allocated to any other of the set of discovery patterns for the same transmission time period.

9. An apparatus comprising: a processor and memory including computer program code, wherein the memory and computer program code are configured to, with the processor, cause the apparatus to: control a radio transmitter or radio transceiver of a first node to transmit discovery signals at time periods defined by a first discovery pattern allocated to said first node from a set of discovery patterns each defining a respective combination of transmission time periods from a set of time periods; and control the radio transmitter or radio transceiver to use for said discovery signals one or more radio resources allocated to the transmission time periods of said first discovery pattern from radio resources shared by the set of discovery patterns, wherein any radio resource allocated to any transmission time period of any one of the discovery patterns is distinguished from any radio resource allocated to any other of the discovery patterns for the same transmission time period.

10. An apparatus according to claim 9, wherein the memory and computer program code are further configured to, with the processor, cause the apparatus to control said radio transmitter or radio transceiver to make transmissions according to a frame structure in which a radio frame is divided into subframes; and wherein said set of time periods are spread across a plurality of said sub-frames.

11. An apparatus according to claim 9 or claim 10, wherein each discovery pattern of the set of discovery patterns comprises the same number of transmission time periods, and the same number of detect time periods for the detection of discovery signals transmitted by other nodes according to other discovery patterns from said set of discovery patterns.

12. An apparatus according to claim 11, wherein the number of transmission time periods for each discovery pattern is the same as the number of detect time periods for each discovery pattern.

13. An apparatus according to any of claims 9 to 12, wherein the set of radio resources shared by the set of discovery patterns comprises a set of frequency resources for frequency division multiplexing of discovery signals or a set of spreading codes for code division multiplexing of discovery signals or a set of time resources for time division multiplexing of discovery signals.

14. An apparatus according to any of claims 9 to 13, wherein the memory and computer program code are further configured to, with the processor, cause the apparatus to control a radio receiver or radio transceiver of the first node to receive from a controlling node an indicator of which one of said set of discovery patterns is assigned to the first node, and information about how radio resources for discovery signals are shared between the set of discovery patterns.

15. An apparatus comprising: a processor and memory including computer program code, wherein the memory and computer program code are configured to, with the processor, cause the apparatus to: receive from a radio receiver or radio transceiver of a first node information about signals detected in time periods assigned to transmissions of discovery signals by other nodes; and allocate said detected signals to respective ones of a set of discovery patterns according to information about how a set of radio resources is mapped to said set of discovery patterns, wherein each discovery pattern defines a respective combination of transmission time periods from a set of time periods, and wherein any radio resource allocated to any transmission time period of any one of the discovery patterns is distinguished from any radio resource allocated to any other of the set of discovery patterns for the same transmission time period.

## Patentansprüche

1. Verfahren, umfassend: Steuern eines Funksenders oder Funkempfängers eines ersten Knotens zum Übertragen von Entdeckungssignalen in Zeitperioden, definiert durch ein erstes Entdeckungsmuster, das dem ersten Knoten aus einer Menge von Entdeckungsmustern zugeteilt ist, die jedes eine jeweilige Kombination von Übertragungszeitperioden aus einer Menge von Zeitperioden definieren; und Steuern des Funksenders oder Funkempfängers zum Verwenden, für die Entdeckungssignale, eines oder mehrerer Funkbetriebsmittel, den Übertragungszeitperioden des ersten Entdeckungsmusters aus Funkbetriebsmitteln zugeteilt, die von der Menge von Entdeckungsmustern geteilt werden, wobei ein Funkbetriebsmittel, das einer Übertragungszeitperiode einer der Entdeckungsmuster zugeteilt ist, sich von einem Funkbetriebsmittel, das einem anderen der Entdeckungsmuster für die gleiche Übertragungszeitperiode zugeteilt ist, unterscheidet.

2. Verfahren nach Anspruch 1, ferner umfassend Steuern des Funksenders oder Funkempfängers zum Durchführen von Übertragungen gemäß einer Rahmenstruktur, in der ein Funkrahmen in Teilrahmen aufgeteilt ist; und wobei die Menge von Zeitperioden über eine Vielzahl der Teilrahmen verteilt ist.

3. Verfahren nach einem der vorstehenden Ansprüche, wobei jedes Entdeckungsmuster der Menge von Entdeckungsmustern die gleiche Anzahl von Übertragungszeitperioden und die gleiche Anzahl von Detektionszeitperioden für die Detektion von Entdeckungssignalen, die von anderen Knoten gemäß von der Menge von Entdeckungsmustern verschiedenen Entdeckungsmustern übertragen werden, umfasst.

4. Verfahren nach Anspruch 3, wobei die Anzahl von Übertragungszeitperioden für jedes Entdeckungsmuster die gleiche ist wie die Anzahl von Detektionszeitperioden für jedes Entdeckungsmuster.

5. Verfahren nach einem der vorstehenden Ansprüche, wobei die Menge von Funkbetriebsmitteln, die von der Menge von Entdeckungsmustern geteilt werden, eine Menge von Frequenzbetriebsmitteln für Frequenzmultiplexing von Entdeckungssignalen oder eine Menge von Spreizcodes für Codemultiplexing von Entdeckungssignalen oder eine Menge von Zeitbetriebsmitteln für Zeitmultiplexing von Entdeckungssignalen umfasst.

6. Verfahren nach einem der vorstehenden Ansprüche, umfassend Steuern eines Funkempfängers oder Funksenders des ersten Knotens zum Empfangen, von einem steuernden Knoten, einer Angabe davon, welches eine der Menge von Entdeckungsmustern dem ersten Knoten zugewiesen ist, und Informationen darüber, wie Funkbetriebsmittel für Entdeckungssignale zwischen der Menge von Entdeckungsmustern geteilt werden.

7. Verfahren, umfassend: Empfangen, von einem Funkempfänger oder Funksender eines ersten Knotens, von Informationen über Signale, detektiert in Zeitperioden, die Übertragungen von Entdeckungssignalen durch andere Knoten zugewiesen sind; und Zuteilen der detektierten Signale zu jeweiligen einen einer Menge von Entdeckungsmustern gemäß Informationen darüber, wie eine Menge von Funkbetriebsmitteln auf die Menge von Entdeckungsmustern abgebildet ist, wobei jedes Entdeckungsmuster eine jeweilige Kombination von Übertragungszeitperioden aus einer Menge von Zeitperioden definiert und wobei jedes Funkbetriebsmittel, das einer Übertragungszeitperiode eines der Entdeckungsmuster zugeteilt ist, sich von einem Funkbetriebsmittel, das einem anderen der Menge von Entdeckungsmustern für die gleiche Übertragungszeitperiode zugeteilt ist, unterscheidet.

8. Verfahren, umfassend: Steuern eines Funkempfängers oder Funksenders zum Übertragen, an einen Knoten, von Informationen über ein Entdeckungsmuster, das dem Knoten aus einer Menge von Entdeckungsmustern zugewiesen ist; und Steuern des Funkempfängers oder Funksenders zum Übertragen, an den Knoten, von Informationen darüber, wie eine Menge von Funkbetriebsmitteln auf die Menge von Entdeckungsmustern abgebildet ist; wobei jedes Entdeckungsmuster eine jeweilige Kombination von Übertragungszeitperioden aus einer Menge von Zeitperioden definiert und wobei jedes Funkbetriebsmittel, das einer Übertragungszeitperiode eines der Entdeckungsmuster zugeteilt ist, sich von einem Funkbetriebsmittel, das einem anderen der Menge von Entdeckungsmustern für die gleiche Übertragungszeitperiode zugeteilt ist, unterscheidet.

9. Vorrichtung, umfassend: einen Prozessor und Speicher, der Computerprogrammcode enthält, wobei der Speicher und der Computerprogrammcode konfiguriert sind, mit dem Prozessor, zu bewirken, dass die Vorrichtung: einen Funksender oder Funkempfänger eines ersten Knotens zum Übertragen von Entdeckungssignalen in Zeitperioden steuert, definiert durch ein erstes Entdeckungsmuster, das dem ersten Knoten aus einer Menge von Entdeckungsmustern zugeteilt ist, die jedes eine jeweilige Kombination von Übertragungszeitperioden aus einer Menge von Zeitperioden definieren; und den Funksender oder Funkempfänger steuert zum Verwenden, für die Entdeckungssignale, eines oder mehrerer Funkbetriebsmittel, den Übertragungszeitperioden des ersten Entdeckungsmusters aus Funkbetriebsmitteln zugeteilt, die von der Menge von Entdeckungsmustern geteilt werden, wobei ein Funkbetriebsmittel, das einer Übertragungszeitperiode einer der Entdeckungsmuster zugeteilt ist, sich von einem Funkbetriebsmittel, das einem anderen der Entdeckungsmuster für die gleiche Übertragungszeitperiode zugeteilt ist, unterscheidet.

10. Vorrichtung nach Anspruch 9, wobei der Speicher und der Computerprogrammcode ferner konfiguriert sind, mit dem Prozessor, zu bewirken, dass die Vorrichtung den Funksender oder Funkempfänger steuert, Übertragungen gemäß einer Rahmenstruktur durchzuführen, in der ein Funkrahmen in Teilrahmen aufgeteilt ist; und wobei die Menge von Zeitperioden über eine Vielzahl der Teilrahmen verteilt ist.

11. Vorrichtung nach Anspruch 9 oder Anspruch 10, wobei jedes Entdeckungsmuster der Menge von Entdeckungsmustern die gleiche Anzahl von Übertragungszeitperioden und die gleiche Anzahl von Detektionszeitperioden für die Detektion von Entdeckungssignalen, die von anderen Knoten gemäß von der Menge von Entdeckungsmustern verschiedenen Entdeckungsmustern übertragen werden, umfasst.

12. Vorrichtung nach Anspruch 11, wobei die Anzahl von Übertragungszeitperioden für jedes Entdeckungsmuster die gleiche ist wie die Anzahl von Detektionszeitperioden für jedes Entdeckungsmuster.

13. Vorrichtung nach einem der Ansprüche 9 bis 12, wobei die Menge von Funkbetriebsmitteln, die von der Menge von Entdeckungsmustern geteilt werden, eine Menge von Frequenzbetriebsmitteln für Frequenzmultiplexing von Entdeckungssignalen oder eine Menge von Spreizcodes für Codemultiplexing von Entdeckungssignalen oder eine Menge von Zeitbetriebsmitteln für Zeitmultiplexing von Entdeckungssignalen umfasst.

14. Vorrichtung nach einem der Ansprüche 9 bis 13, wobei der Speicher und der Computerprogrammcode ferner konfiguriert sind, mit dem Prozessor, zu bewirken, dass die Vorrichtung einen Funkempfänger oder Funksender des ersten Knotens steuert, von einem steuernden Knoten eine Angabe davon zu empfangen, welches eine der Menge von Entdeckungsmustern dem ersten Knoten zugewiesen ist, und Informationen darüber, wie Funkbetriebsmittel für Entdeckungssignale zwischen der Menge von Entdeckungsmustern geteilt werden.

15. Vorrichtung, umfassend: einen Prozessor und Speicher, der Computerprogrammcode enthält, wobei der Speicher und der Computerprogrammcode konfiguriert sind, mit dem Prozessor, zu bewirken, dass die Vorrichtung: von einem Funkempfänger oder Funksender eines ersten Knotens Information über Signale empfängt, die in Zeitperioden detektiert werden, die Übertragungen von Entdeckungssignalen durch andere Knoten zugewiesen sind; und die detektierten Signale jeweiligen einen einer Menge von Entdeckungsmustern gemäß Informationen darüber, wie eine Menge von Funkbetriebsmitteln auf die Menge von Entdeckungsmustern abgebildet ist, zuteilt, wobei jedes Entdeckungsmuster eine jeweilige Kombination von Übertragungszeitperioden aus einer Menge von Zeitperioden definiert und wobei sich ein Funkbetriebsmittel, das einer Übertragungszeitperiode eines der Entdeckungsmuster zugeteilt ist, von einem Funkbetriebsmittel, das einem anderen der Menge von Entdeckungsmustern für die gleiche Übertragungszeitperiode zugeteilt ist, unterscheidet.

**Revendications**

1. Procédé, comprenant : la commande d'un émetteur radio ou d'un émetteur-récepteur radio d'un premier noeud pour transmettre des signaux de découverte à des périodes de temps définies par une première configuration de découverte assignée audit premier noeud parmi un ensemble de configurations de découverte définissant chacune une combinaison respective de périodes de temps de transmission d'un ensemble de périodes de temps ; et la commande de l'émetteur radio ou de l'émetteur-récepteur radio pour qu'ils utilisent pour lesdits signaux de découverte une ou plusieurs ressources radio assignées aux périodes de temps de transmission de ladite première configuration de découverte de ressources radio partagées par l'ensemble de configurations de découverte, dans lequel toute ressource radio assignée à une quelconque période de temps de transmission de l'une quelconque des configurations de découverte est différenciée d'une quelconque ressource radio assignée à n'importe quelle autre configuration des configurations de découverte pour la même période de temps de transmission.

**2.** Procédé selon la revendication 1, comprenant en outre la commande dudit émetteur radio ou émetteur-récepteur radio pour effectuer des transmissions conformément à une structure de trame dans laquelle une trame radio est divisée en sous-trames ; et ledit ensemble de périodes de temps est étalé sur une pluralité desdites sous-trames.

**3.** Procédé selon l'une quelconque des revendications précédentes, dans lequel chaque configuration de découverte de l'ensemble de configurations de découverte comprend le même nombre de périodes de temps de transmission, et le même nombre de périodes de temps de détection pour la détection de signaux de découverte transmis par d'autres noeuds conformément à d'autres configurations de découverte dudit ensemble de configurations de découverte.

**4.** Procédé selon la revendication 3, dans lequel le nombre de périodes de temps de transmission de chaque configuration de découverte est le même que le nombre de périodes de temps de détection de chaque configuration de découverte.

**5.** Procédé selon l'une quelconque des revendications précédentes, dans lequel l'ensemble de ressources radio partagées par l'ensemble de configurations de découverte comprend un ensemble de ressources de fréquence pour le multiplexage par répartition en fréquence de signaux de découverte ou un ensemble de codes d'étalement pour le multiplexage par différence de code de signaux de découverte ou un ensemble de ressources de temps pour le multiplexage par répartition dans le temps de signaux de découverte.

**6.** Procédé selon l'une quelconque des revendications précédentes, comprenant la commande d'un récepteur radio ou d'un émetteur-récepteur radio du premier noeud pour recevoir depuis un noeud de commande un indicateur relatif à la configuration de découverte dudit ensemble de configurations de découverte qui est assignée au premier noeud, et des informations relatives à la manière dont les ressources radio pour les signaux de découverte sont partagées entre l'ensemble de configurations de découverte.

**7.** Procédé, comprenant : la réception depuis un récepteur radio ou un émetteur-récepteur radio d'un premier noeud des informations relatives aux signaux détectés dans des périodes de temps assignées à des transmissions de signaux de découverte par d'autres noeuds ; et l'assignation desdits signaux détectés à des configurations respectives d'un ensemble de configurations de découverte en fonction d'informations relatives à la manière dont un ensemble de ressources radio est mis en correspondance avec ledit ensemble de configurations de découverte, dans lequel chaque configuration de découverte définit une combinaison respective de périodes de temps de transmission d'un ensemble de périodes de temps, et dans lequel toute ressource radio assignée à n'importe quelle période de temps de transmission de l'une quelconque des configurations de découverte est différenciée d'une quelconque ressource radio assignée à n'importe quelle autre configuration de l'ensemble de configurations de découverte pour la même période de temps de transmission.

**8.** Procédé, comprenant : la commande d'un émetteur radio ou d'un émetteur-récepteur radio pour transmettre à un noeud des informations relatives à une configuration de découverte assignée audit noeud parmi un ensemble de configurations de découverte ; et la commande dudit émetteur radio ou émetteur-récepteur radio pour transmettre audit noeud des informations relatives à la manière dont un ensemble de ressources radio est mis en correspondance avec ledit ensemble de configurations de découverte ; dans lequel chaque configuration de découverte définit une combinaison respective de périodes de temps de transmission d'un ensemble de périodes de temps, et dans lequel toute ressource radio assignée à une quelconque période de temps de transmission de l'une quelconque des configurations de découverte est différenciée d'une quelconque ressource radio assignée à n'importe quelle autre configuration des configurations de découverte pour la même période de temps de transmission.

**9.** Appareil comprenant : un processeur et une mémoire comportant un code de programme informatique, dans lequel la mémoire et le code de programme informatique sont configurés pour, avec le processeur, amener l'appareil à : commander un émetteur radio ou un émetteur-récepteur radio d'un premier noeud pour transmettre des signaux de découverte à des périodes de temps définies par une première configuration de découverte assignée audit premier noeud parmi un ensemble de configurations de découverte définissant chacune une combinaison respective de périodes de temps de transmission d'un ensemble de périodes de temps ; et commander l'émetteur radio ou l'émetteur-récepteur radio pour qu'ils utilisent pour lesdits signaux de découverte une ou plusieurs ressources radio assignées aux périodes de temps de transmission de ladite première configuration de découverte de ressources radio partagées par l'ensemble de configurations de découverte, dans lequel toute ressource radio assignée à une quelconque période de temps de transmission de l'une quelconque des configurations de découverte est différenciée d'une quelconque ressource radio assignée à n'importe quelle autre configuration des configurations de découverte pour la même période de temps de transmission.

10. Appareil selon la revendication 9, dans lequel la mémoire et le code de programme informatique sont configurés en outre pour, avec le processeur, amener l'appareil à commander ledit émetteur radio ou émetteur-récepteur radio pour effectuer des transmissions conformément à une structure de trame dans laquelle une trame radio est divisée en sous-trames ; et dans lequel ledit ensemble de périodes de temps est étalé sur une pluralité desdites sous-trames.

11. Appareil selon la revendication 9 ou la revendication 10, dans lequel chaque configuration de découverte de l'ensemble de configurations de découverte comprend le même nombre de périodes de temps de transmission, et le même nombre de périodes de temps de détection pour la détection de signaux de découverte transmis par d'autres noeuds conformément à d'autres configurations de découverte dudit ensemble de configurations de découverte.

12. Appareil selon la revendication 11, dans lequel le nombre de périodes de temps de transmission de chaque configuration de découverte est le même que le nombre de périodes de temps de détection de chaque configuration de découverte.

13. Appareil selon l'une quelconque des revendications 9 à 12, dans lequel l'ensemble de ressources radio partagées par l'ensemble de configurations de découverte comprend un ensemble de ressources de fréquence pour le multiplexage par répartition en fréquence de signaux de découverte ou un ensemble de codes d'étalement pour le multiplexage par différence de code de signaux de découverte ou un ensemble de ressources de temps pour le multiplexage par répartition dans le temps de signaux de découverte.

14. Appareil selon l'une quelconque des revendications 9 à 13, dans lequel la mémoire et le code de programme informatique sont configurés en outre pour, avec le processeur, amener l'appareil à commander un récepteur radio ou un émetteur-récepteur radio du premier noeud pour recevoir depuis un noeud de commande un indicateur relatif à la configuration de découverte dudit ensemble de configurations de découverte qui est assignée au premier noeud, et des informations relatives à la manière dont les ressources radio pour les signaux de découverte sont partagées entre l'ensemble de configurations de découverte.

15. Appareil comprenant : un processeur et une mémoire comportant un code de programme informatique, dans lequel la mémoire et le code de programme informatique sont configurés pour, avec le processeur, amener l'appareil à : recevoir depuis un récepteur radio ou un émetteur-récepteur radio d'un premier noeud des informations relatives aux signaux détectés dans des périodes de temps assignées à des transmissions de signaux de découverte par d'autres noeuds ; et assigner lesdits signaux détectés à des configurations respectives d'un ensemble de configurations de découverte en fonction d'informations relatives à la manière dont un ensemble de ressources radio est mis en correspondance avec ledit ensemble de configurations de découverte, dans lequel chaque configuration de découverte définit une combinaison respective de périodes de temps de transmission d'un ensemble de périodes de temps, et dans lequel toute ressource radio assignée à n'importe quelle période de temps de transmission de l'une quelconque des configurations de découverte est différenciée d'une quelconque ressource radio assignée à n'importe quelle autre configuration de l'ensemble de configurations de découverte pour la même période de temps de transmission.

# FIG 1

## FIG 2A

205

215

6

201

206

203

217

## FIG 2B

401

4

403

406

407

## FIG 3

301

2

303

306

307

309

FIG 4

RF$_{N-1}$ | RF$_N$ | RF$_{N+1}$ | RF$_{N+2}$

42

SF$_0$ | SF$_1$ | SF$_2$ | SF$_3$ | SF$_4$ | SF$_{N-1}$ | SF$_N$

0 1 44 46 48 2 3 44 46 48 4 5 44 46 48 0 1 44 46 48 2 3 44 46 48

# FIG 5

| | | TIME SLOT INDEX | | | | | |
|---|---|---|---|---|---|---|---|
| | | 0 | 1 | 2 | 3 | 4 | 5 |
| DISCOVERY PATTERN INDEX | 1 | R | R | R | T | T | T |
| | 2 | R | R | T | T | T | R |
| | 3 | R | T | T | T | R | R |
| | 4 | T | T | T | R | R | R |
| | 5 | T | T | R | R | R | T |
| | 6 | T | R | R | R | T | T |
| | 7 | R | R | T | R | T | T |
| | 8 | R | T | R | T | T | R |
| | 9 | T | R | T | T | R | R |
| | 10 | R | T | T | R | R | T |
| | 11 | T | T | R | R | T | R |
| | 12 | T | R | R | T | R | T |
| | 13 | R | T | R | R | T | T |
| | 14 | T | R | R | T | T | R |
| | 15 | R | R | T | T | R | T |
| | 16 | R | T | T | R | T | R |
| | 17 | T | T | R | T | R | R |
| | 18 | T | R | T | R | R | T |
| | 19 | R | T | R | T | R | T |
| | 20 | T | R | T | R | T | R |

# FIG 6A

| | | TIME SLOT INDEX | | | | | |
| | | 0 | 1 | 2 | 3 | 4 | 5 |
|---|---|---|---|---|---|---|---|
| DISCOVERY PATTERN INDEX | 1 | R | R | R | 1 | 1 | 1 |
| | 2 | R | R | 1 | 2 | 2 | R |
| | 3 | R | 1 | 2 | 3 | R | R |
| | 4 | 1 | 2 | 3 | R | R | R |
| | 5 | 2 | 3 | R | R | R | 2 |
| | 6 | 3 | R | R | R | 3 | 3 |
| | 7 | R | R | 4 | R | 4 | 4 |
| | 8 | R | 4 | R | 4 | 5 | R |
| | 9 | 4 | R | 5 | 5 | R | R |
| | 10 | R | 5 | 6 | R | R | 5 |
| | 11 | 5 | 6 | R | R | 6 | R |
| | 12 | 6 | R | R | 6 | R | 6 |
| | 13 | R | 7 | R | R | 7 | 7 |
| | 14 | 7 | R | R | 7 | 8 | R |
| | 15 | R | R | 7 | 8 | R | 8 |
| | 16 | R | 8 | 8 | R | 9 | R |
| | 17 | 8 | 9 | R | 9 | R | R |
| | 18 | 9 | R | 9 | R | R | 9 |
| | 19 | R | 10 | R | 10 | R | 10 |
| | 20 | 10 | R | 10 | R | 10 | R |

# FIG 6B

| | | PHYSICAL RADIO RESOURCE INDEX | | | | | | | | | |
| | | 1 | 2 | 3 | 4 | 5 | 6 | 7 | 8 | 9 | 10 |
|---|---|---|---|---|---|---|---|---|---|---|---|
| TIME SLOT INDEX | 0 | 4 | 5 | 6 | 9 | 11 | 12 | 14 | 17 | 18 | 20 |
| | 1 | 3 | 4 | 5 | 8 | 10 | 11 | 13 | 16 | 17 | 19 |
| | 2 | 2 | 3 | 4 | 7 | 9 | 10 | 15 | 16 | 18 | 20 |
| | 3 | 1 | 2 | 3 | 8 | 9 | 12 | 14 | 15 | 17 | 19 |
| | 4 | 1 | 2 | 6 | 7 | 8 | 11 | 13 | 14 | 16 | 20 |
| | 5 | 1 | 5 | 6 | 7 | 10 | 12 | 13 | 15 | 18 | 19 |

## FIG 7A

| DISCOVERY PATTERN INDEX | TIME SLOT INDEX | | | | | |
|---|---|---|---|---|---|---|
| | 0 | 1 | 2 | 3 | 4 | 5 |
| 1 | R | R | R | 4 | 5 | 6 |
| 2 | R | R | 3 | 5 | 6 | R |
| 3 | R | 2 | 4 | 6 | R | R |
| 4 | 1 | 3 | 5 | R | R | R |
| 5 | 2 | 4 | R | R | R | 7 |
| 6 | 3 | R | R | R | 7 | 8 |
| 7 | R | R | 6 | R | 8 | 9 |
| 8 | R | 5 | R | 7 | 9 | R |
| 9 | 4 | R | 7 | 8 | R | R |
| 10 | R | 6 | 8 | R | R | 10 |
| 11 | 5 | 7 | R | R | 10 | R |
| 12 | 6 | R | R | 9 | R | 1 |
| 13 | R | 8 | R | R | 1 | 2 |
| 14 | 7 | R | R | 10 | 2 | R |
| 15 | R | R | 9 | 1 | R | 3 |
| 16 | R | 9 | 10 | R | 3 | R |
| 17 | 8 | 10 | R | 2 | R | R |
| 18 | 9 | R | 1 | R | R | 4 |
| 19 | R | 1 | R | 3 | R | 5 |
| 20 | 10 | R | 2 | R | 4 | R |

## FIG 7B

| TIME SLOT INDEX | PHYSICAL RADIO RESOURCE INDEX | | | | | | | | | |
|---|---|---|---|---|---|---|---|---|---|---|
| | 1 | 2 | 3 | 4 | 5 | 6 | 7 | 8 | 9 | 10 |
| 0 | 4 | 5 | 6 | 9 | 11 | 12 | 14 | 17 | 18 | 20 |
| 1 | 19 | 3 | 4 | 5 | 8 | 10 | 11 | 13 | 16 | 17 |
| 2 | 18 | 20 | 2 | 3 | 4 | 7 | 9 | 10 | 15 | 16 |
| 3 | 15 | 17 | 19 | 1 | 2 | 3 | 8 | 9 | 12 | 14 |
| 4 | 13 | 14 | 16 | 20 | 1 | 2 | 6 | 7 | 8 | 11 |
| 5 | 12 | 13 | 15 | 18 | 19 | 1 | 5 | 6 | 7 | 10 |

# FIG 8

802: RECEIVE INFORMATION FROM AP 2 ABOUT THE DISCOVERY PATTERN ASSIGNED TO UE/RN FROM A SET OF DISCOVERY PATTERNS, AND RESOURCE SHARING INFORMATION ABOUT THE SHARING OF PHYSICAL DISCOVERY RESOURCES BETWEEN THE SET OF DISCOVERY PATTERNS

804: CONTROL TRANSCEIVER OF UE/RN TO OPERATE IN DISCOVERY SIGNAL TRANSMISSION AND DETECT MODES IN ACCORDANCE WITH DISCOVERY PATTERN ASSIGNED TO UE/RN, AND USING PHYSICAL DISCOVERY RESOURCES FOR DISCOVERY SIGNAL TRANSMISSIONS IN ACCORDANCE WITH SHARING INFORMATION RECEIVED AT STEP 802

806: COLLECT RESULTS OF MEASUREMENTS OF DISCOVERY SIGNALS DETECTED AT UE/RAN OVER PERIOD OF DISCOVERY PATTERN

808: ASSIGN MEASUREMENTS TO RESPECTIVE DISCOVERY PATTERNS ON THE BASIS OF RESOURCE SHARING INFORMATION RECEIVED AT STEP 802 ABOUT SHARING OF PHYSICAL DISCOVERY RESOURCES BETWEEN THE SET OF DISCOVERY PATTERNS

810: CONTROL TRANSCEIVER OF UE/RN TO TRANSMIT TO AP 2 REPORTS OF MEASUREMENT RESULTS FOR ONE OR MORE DISCOVERY PATTERNS FOR WHICH DISCOVERY SIGNALS WHERE DETECTED

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2011121374 A1